# EUROPEAN PATENT APPLICATION

(11) **EP 1 962 392 A1**
(43) Date of publication of application: **27.08.2008**
(21) Application number: 07253290.6
(22) Date of filing: 21.08.2007
(51) Int. Cl.: H01R 13/74

(54) **Connector**

(30) Priority: 23.02.2007 EP 07250772
(71) Applicant: C & C Marshall Limited, Sidney Little Road Churchfields Industrial Estate St Leonards-on-Sea, East Sussex TN38 9PU (GB)
(72) Inventor: Austin, Brian Richard, Westfield TN35 4QZ East Sussex (GB)
(74) Representative: Lamb, Martin John Carstairs

(57) **Abstract**

In order to provide a connector for connecting an accessory box (2) and a cable structure (3) having an outer protective sheath (7) and cables (5) and (6) which are not fixed with respect to the sheath (7), the connector comprises a first piece (8) having a first contact and a second piece (9) having a second contact (22), the first piece and the second piece being removably attached to one another so that in the engaged position, the first and second electrical contacts contact one another to allow the transmission of power, communications or data signals, the second piece (9) having formations for connecting to the cable (5, 6), a first component (10) which is fixed with respect to the formation and a second component (11) which is rotatable with respect to the first component (10), the second component (11) having means (18) for fixing the sheath 7 of the cable structure, the first component (10) and the second component (11) being rotatable with respect to one another but axially substantially fixed with respect to one another.

The connector (1) may be fixed to the box by a structure comprising an annular bushing having a flange (24) which is engageable with a locking nut (27) between which the wall 25 of the accessory box (2) can be gripped, a further locking nut (28) being provided for locking the first and second pieces (8, 9) together, the locking nut having a screw thread which is engageable with the same thread (32) as engages the locking nut (27).

## Description

The present invention relates to a connector for connecting an accessory box and a cable structure of the type comprising cables and an outer protective sheath which is not rotationally fixed to the cables.

It is particularly useful for connecting a cable structure of a type defined to an accessory box which is mounted at floor level in a raised floor structure so that an interface may be provided for connecting users (such as PCs, telephones and other operative equipment) to networks for transmitting power, communications or data which are mounted beneath the raised floor.

Cables of this type are frequently used for carrying signal or power wires in the space beneath a raised floor. The outer protective sheath provides protection against accidental damage due to crushing. It helps to contain the wires. However, because it does not require to be specifically connected to the cables, ordinary cables can be used with no special modifications.

An outlet box for a raised floor is described for example in GB2194975. In this disclosure, cables in the form of flying leads are shown in extending from cable trays into openings of an accessory box. The cables are not shown protected by a protective sheath, but could in practice be enclosed in such a sheath.

Accessory boxes of this type are widely used and provide a very flexible system for providing data, power and communications distribution for example in office environments. The present invention is particularly concerned with simplifying the assembly and manufacture of such systems.

Conventionally, cables entering an accessory box are installed by a qualified electrician and wired into place, with each individual conductor fixed in place before the accessory box is completed. This is found to be time consuming and to require a lot of skilled input.

Accordingly, there is an interest in providing connections between cables and outlets of the accessory box by a plug-in connection, which can be assembled relatively quickly by persons without extensive experience.

At the same time, there is a desire to continue the use of outer protective sheathing for the wires. However, it has been found that such sheathing has a certain inherent stiffness which can give rise, during assembly, to unnecessary kinking or folding if the cable structure has to turn to a certain angle to be plugged into an accessory box. Accordingly, the present invention sets out to provide a connector for connecting a cable structure of the type defined above to another structure, for example another cable structure or an accessory box, in which the continuity of protection provided by the sheath can be maintained but in which free movement of the cable structure is allowed, so that installation is relatively straightforward.

EP-A-0693811 discloses an electrical cable with a bend retaining jacket capable of conforming to a substantial installation curve. It is specifically intended for use in vehicles such as aircraft where resistance to extreme conditions such as movement and lightening strike is required. It is not described as a plug - in type connector.
Electrical conductors pass through the hollow support body. The cable comprises electrical conductors and several layers of protection in addition to the bend-retaining jacket. The bend-retaining jacket and at least one layer of protection are fixed to the metal bushing. As a result, the metal bushing is not substantially rotatable with respect to the cable.

The present inventor has realised that a connector may be provided at the end of a cable structure having plug-in parts, a rotatable collar being provided to allow free rotation between a component housing the plug-in parts and the end of the cable sheath.

Accordingly, in a first aspect, the present invention provides a connector for connecting a device and a cable structure of the type comprising at least one cable and an outer protective sheath which is not rotationally fixed to the cable, the connector comprising a first piece having first contacts and a second piece, having second contacts, the first piece and the second piece being removably attached to one another so that, in the engaged position, the first and second contacts contact one another, to allow the transmission of power, communications on data signals, the second piece having a formation for connecting to the cable, a first component for engaging the first piece and a second component which is rotatable in use with respect to the first component and the cable, the second component having means for fixing to the sheath of the cable structure, the first component and second component being rotatable with respect to one another but axially substantially fixed with respect to one another.

When assembled, the second component may preferably be rotatable through at least half a turn, preferably at least a whole turn with respect to the first component.

It is also desired, when preparing an accessory box having a plug-in connection, to allow the box itself to be relatively shallow, so that it can be fitted into relatively small under-floor spaces. It is also desired to provide a design which is simple to construct, having a small number of parts.

The second aspect of the present invention accordingly provides a connector for an accessory box may have a first plug-in piece fixed in the box by a structure which comprises a bushing having a screw threaded exterior for projecting out of an opening of the accessory box and a flange for engaging inside an accessory box, a fixing nut being provided for clamping the wall of the accessory box between the flange and the nut engaged with the screw thread, a second plug-in piece being connectable to the first piece and being further fixed thereto by a screw threaded nut engaging the same screw thread.

By arranging for the flange to be located inside the box, the nut can be located outside the box, which is much more convenient for rotation of the nut, particularly if the box is relatively shallow. By providing for the nut and the locking ring to engage the same screw thread, a particularly simple and straightforward construction is obtained.

Preferred and optional features of the present invention will be described further below.

The connector of the present invention may be used to connect two cables of the type defined above or a cable of the type defined above with another cable. It may be used to connect a cable of type defined above with an accessory box.

The cable structure may be of the type which is widely used, comprising at least one cable (which may be for transmitting power, clean power, data, communication signals, connection to earth etc.) inside a protective sheath. The protective sheath may be formed of any suitable material, for example a corrugated flexible material, for example made of synthetic material such as thermoplastic, metal, or composite material. This is for example a flexible hose. Preferably, there is substantially no connection between the cable and the second component (except through the first component), or the connection between the cable and the second component is relatively light, may be comprising a single wire, for example an earth wire, which allows substantial rotation of the second component with respect to the cable, preferably allowing rotation of at least a half turn, and preferably at least a full turn, with respect to the cable without the causing the cable to twist to any substantial degree. Preferably, there is substantially no connection between the protective sheath and the first component, except through the second component.

The cable structure may be supplied ready assembled, with cable of the appropriate type laid in the sheath. Alternatively, it may be assembled by the person constructing a power, communications or data distribution system.

The connector of the present invention allows plug-in type connection between the device and the cable structure.

The second component may be fixable to the sheath of the cable structure by any suitable means. For example, it may be fixed by a frictional connection, by interference fit, by adhesion or by positive mechanical locking. In a preferred embodiment, the second component comprises at least one projecting fixing part, the fixing part being engageable in a part of the structure of the protective sheath. For example, where the protective sheath comprises spiral shape convolutions, the fixing means may engage in the space between adjacent convolutions. There may be more than one projecting fixing means. The fixing means may project outwardly from the component for engaging within the inside of the sheath. Alternatively, the component may comprise an annular opening into which the sheath is insertable, where it can be engaged by the fixing means projecting radially inwardly. The fixing means may be movable between a release position in which it does not engage the sheath and a fixing position in which it does engage the sheath.

The fixing means preferably comprises a screw extending through a threaded hole formed in the component, which can be rotated to that it engages the protective sheath.

The second component preferably comprises an annular structure through which cable may pass so that it can engage the first component. It is suitably in the form of a collar. The first component may be in the form of a collar.

The rotational connection between the first and second component may be provided by any suitable structure. Preferably, at least one of the first and second components comprises a collar or body having a circular shape, an annular formation being formed defining a shoulder extending round the circular body. It may extend inwardly or outwardly from the circular body. The shoulder may extend for a part of a circle, but preferably extends continuously throughout the whole circumference of a circle. The other of the first and second components may then comprise a collar with a formation which is engageable with the shoulder.

Preferably, there are at least two shoulders so that a formation of the other component can be trapped between the two shoulders or the two shoulders can be trapped between formations of the other component.

Preferably, one of the first and second collars comprises two shoulders axially spaced apart from one another and the other collar comprises an annularly extending crimp which has been formed in a metal body, to have a dimension which corresponds to the axial spacing between the shoulders, so that a rotational fit is formed. Preferably, the crimp has been formed in situ with the collar by engaging the collar with the shoulders and then deforming the collar.

The first component may be integral with the second piece or it may be connectable with the second piece as explained further below. The second piece must provide a formation for engaging the cable. For example, it may comprise electrical contacts for engaging wires of the cable. It may comprise a suitable formation for contacting fibreoptic cable. The second piece also comprises formations whereby wires of the cable structure can be engaged with respective contacts, to provide electrical or optical connectivity through the connector. For example, conventional screw type electrical connections can be provided in a manner known to the person skilled in the art.

There may be any number of contacts, depending upon the number and type of services to be connected by the connector. For example, the connector may allow electrical power and communications to be connected. In this case, there may be four contacts - two for the power and two for the electrical data transmission. The contacts may be configured to connect optical cables. The contact parts may have both electrical and optical contacts.

The first and second component may be formed of any suitable material, but are suitably made of metal, for ease of manufacture.

The first piece will correspond to the second piece in design, in a manner known to the person skilled in the art, to provide plug-in connection between contacts of the first piece and contacts of the second piece. The first piece may further comprise formations for allowing connection between contacts of the first piece and other devices. For example, the contacts may be connected to electrically conductive members, so that electrical communication can be established between a device mounted in the accessory box, such as a socket or outlet.

The first piece and second piece and the contact parts may each be formed of any suitable material, but it is highly preferred that any part comprising a contact is of electrically insulating material, for example thermoplastic material. Preferably, it is formed by moulding.

The contact parts may be integral structures, for example formed by injection moulding, or they may be formed of components which are connected together.

The first piece and second piece are preferably engaged with one another by axially inserting one piece with respect to the other. Means may be provided for preventing axial separation of the first piece and second piece. For example, a locking component may be provided. The locking component preferably comprises a screw thread for interacting with a corresponding screw thread of one of the first and second pieces, and a rotatable connection, for example comprising an annular shoulder, to allow the locking component to rotate with respect to the other piece whilst being axially fixed with respect to it.

The first piece may comprise means for fixing with respect to another structure, for example to an outlet box or to another cable structure.

Preferably, the first piece comprises a first holding part and a first contact part. Preferably, the second piece comprises a second holding part and a second contact part. The second holding part may be formed of the first component and the second component. Preferably, the first contact part comprises the first contact and the second contact part comprises the second contacts. The first contact part may be fixed with respect to the first holding part or it may be movable with respect to it. It may be axially movable or rotationally movable with respect to the first holding part. Similarly, the second contact part may be fixed with the respect to the second holding part or movable with respect to the second holding part. Preferably, the first and second contact parts can be fixed with respect to the first and second holding parts when the first and second contacts are engaged. For example, fixing means may be provided. This means that the contacts, when engaged, can be held stably in position.

However, it is preferred that at least one of the contact parts be movable with respect to its respective holding part, at least when the contacts are not engaged. This allows the respective contact part to be moved into and out of engagement with its respective holding part, which can assist manipulation and engagement, Preferably, the first contact part is substantially fixed with respect to the first holding part. For example, it may be screwed in position. Preferably, the second contact part is not fixed with respect to the second holding part when the contacts are not engaged. Preferably, locking means are provided for locking the first and second contact parts together when the contacts are engaged, to provide further resistance against separation of the contacts. For example, a resiliently deformable part (for example, a claw) may be provided on one of the contact parts, which engages a corresponding formation on the other contact part. Preferably, at least one contact part is engageable by the locking means, the at least one contact part being configured to be received inside the respective holding part.

Preferably, when the at least one contact part is held within the holding part, with the locking means engaged, it is not possible to move the locking means out of engagement, because it is blocked by the proximity of the holding part. For example, the contact part may have a generally cylindrical form of a first radius and the holding part may comprise an annular part having a second, internal radius, the second radius being equal to or less than the sum of the first radius and a distance required for the locking means to move to disengage. In this way, there will not be sufficient space for the locking means to disengage when the at least one contact part is received inside the annular space inside the holding part. The contact part is preferably slidable with respect to the holding part so that, in a first position, where it is out of engagement with the holding part, it can be engaged or disengaged with the other contact part and the locking means engaged or disengaged. Then the at least one contact means can be received inside its respective holding part which prevents subsequent disengagement of the locking means.

In a preferred embodiment, the first piece is mountable in an accessory box. The first piece may comprise a mounting bush, comprising a bore, in which the first contact part is mounted, a locking nut, engageable with an external thread formed on the mounting bush, and an annular formation such as a shoulder on an external surface of the mounting bush. Preferably, there is a sealing gasket of annular shape. In use, the bush may be inserted into an opening of the accessory box, from the inside of the box or from the outside, with the screw-threaded part of the mounting bush projecting through the opening. The sealing gasket is passed over the threads. Then, the locking nut is screwed onto the threads and screwed down, so that the annular shoulder of the mounting bush and the locking nut grip between them the wall of the accessory box and the sealing gasket, thereby forming a strong, sealed mounting.

The locking nut may have any suitable shape, for example having flats, for example having a hexagonal form.

In use, during a manufacturing stage, a connector according to the present invention comprising the first piece, the second piece and the first and second component is provided, optionally further comprising any or all of the locking nut, the sealing gasket and the locking component described above.

In a second phase of the manufacturing step, the cable structure may be engaged with the second piece by first of all connecting a cable of the cable structure to respective formations of the second piece and by subsequently engaging the outer protective sheath with the second component.

The first piece may also, if desired, be engaged with another structure, for example another cable structure or a device such as an accessory box.

The connector is then ready for use in assembly of a service distribution system, for example in an office or similar environment.

During the manufacturing step, the end of the cable structure not connected to the second component may be engaged with another device, for example another connector according to the present invention or a device such as an accessory box.

For example, it may be engaged with a tap-off or other plug structure.

If the cable structure is connected to another device, it may be connected to it in a rotationally fixed fashion or it may comprise a second connector according to the invention.

In an assembly procedure, a cable structure engaged at one end with a first device and at the other end, via a connector according to the present invention, to a second device, may be supplied ready manufactured. The first and second devices will typically be located, when assembled, at a distance from one another and they are quite likely to be located so that the cable structure engages first and second devices in different directions, with the first piece projecting with its engagement axis not aligned with the first device. In this case, the present invention allows the cable structure to be twisted around to present the second piece for engagement with the first piece in a suitable configuration. The resulting twisting of the outer protective sheath is entirely accommodated by the rotational movement between the first component and the second component, allowing the second piece to be presented in the configuration required to plug it into the first piece. In this way, a simple connection of the first and second devices can be obtained in a straightforward manner without introducing strains or tensions into the apparatus.

In the connector of the present invention, the first piece will typically comprise male or female contacts and the second piece will comprise complimentary male or female contacts, respectively. If two connectors are located, one at each end of the cable structure, they may both have male contacts, both female contacts or one male and one female.

The second aspect of the invention may be combined with the first aspect of the invention. The first plug-in piece of the second aspect of the invention may correspond to the first piece of the first aspect of the invention. The second plug in piece of the second aspect of the invention may correspond to the second piece of the first aspect of the invention.

The first and second plug in pieces may have respective contacts which, when the first and second plug in pieces are connected, can contact one another to allow transmission of power, communications or data signals. Formations may be provided in the first and second plug in pieces whereby they may each be connected to cables or other devices.

The fixing nut may comprise an operating surface, to allow it to be rotated by a user. For example, it may have a textured surface for grip or it may comprise flats for engaging a device such as a spanner.

The screw threaded nut for securing the first and second plug in pieces together, may comprise a locking collar, as described in relation to the first aspect of the invention. Preferably, it comprises a screw thread for interacting with the screw thread of the first piece and a rotatable connection, for example comprising an annular shoulder, to allow it to rotate with respect to the second plug in piece whilst being axially fixed with respect to it.

There may also be a sealing gasket. The sealing gasket may be gripped between the fixing nut and a wall structure of the accessory box in use.

The present invention will be further described by way of example only with reference to the following drawings, in which:

### BRIEF DESCRIPTION OF THE DRAWINGS

Figure 1 is a schematic view of a connector according to a first embodiment of the present invention, mounted at the end of a cable structure and used to connect a first and second device.
Figure 2 is a cross-sectional view through figure 1, along line II - II.
Figure 3 shows a schematic view a connector according to a second embodiment of the present invention, during connection of respective contact parts.
Figure 4 is a cross-sectional view through the connector of figure 3, when connected.

### DETAILED DESCRIPTION OF THE DRAWINGS

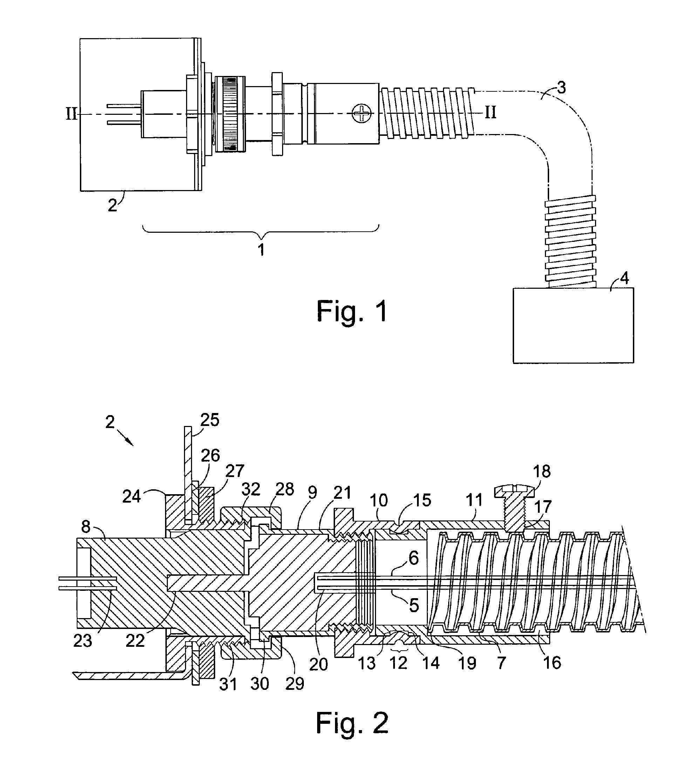

In figure 1, a connector according to the invention, (generally designated 1) is used to connect a first device 2, for example an accessory box, via a cable structure 3, with a second device 4, for example a tap-off unit. For example, the assembly shown on Figure 1 may be found in system for distributing communications, power or data in the space beneath a raised floor.

The first device 2 and the second device are shown schematically, with no details shown. The skilled person would be aware of suitable structures which may be used for such devices.

The cable structure 3 is of indefinite length and, as shown in Figure 1 may include curves or twists, so that any relative configuration of the devices 2 and 4 can be accommodated.

The cable structure 3 comprises a conventional, flexible protective hose, having a convoluted metal exterior and a hollow interior, in which cables (5 and 6, in figure 2) are laid, without being rotationally fixed with respect to the outer sheath 7.

The connector 1 comprises a first piece comprising a first contact part 8 engageable, in use, by a plug-in connection, with a second piece comprising a contact part 9, so that contacts in the first piece are put into electrical or signal- exchange contact with corresponding contacts in the second contact part 9. The second contact part 9 has, screwed onto it, a first component comprising a collar 10. The first collar 10 is of generally circular configuration and is rotatably engaged with a second component comprising a collar 11, so that the first and second collars 10 and 11 may rotate with respect to one another, through at least part of one rotation, but are substantially axially fixed with respect to one another.

It can be seen that the flexible outer sheath 7 of the cable structure is received in an annular socket 16 of the second collar 11, forming a snug fit therewith. The flexible sheath 7 is further fixed with respect to the collar 11 by means of a screw 18 which is rotatably received in a threaded hole 17 of the collar. In use, the screw 8 can be screwed down to make firm contact with the exterior of the sheath 7, so that the sheath 7 is retained by friction. Although not shown in figure 2, it is also possible to engage the screw 18 in convolutions of the sheath 7, to form an even more secure fixing. As a result, relative rotation or axial sliding of the sheath 7 with respect to the collar 11 is prevented.

The bore 16 of the first collar 11 extends up to a shoulder 19 which provides a stop against which the flexible sheath 7 can rest. The collar 11 defines a continuous open bore through which wires 5 and 6 of the cable structure extend.

The second collar 11 is rotatably mounted with respect to the first collar 10.
It can be seen that the second collar 11 comprises a portion of reduced external diameter, in which a continuous circumferentially extending recess is provided, which is defined by opposed shoulder formations 13 and 14.

The first collar 10 comprises a continuous circumferentially extending crimp 15 which engages between the shoulders 13 and 14, preventing axial separation of the first and second collars 10 and 11 but allowing them to rotate with respect to one another.

In assembly, the crimp 15 can be formed using a suitable machine to deform a part of the first collar 10 to engage between the shoulder formations 13 and 14, for example being formed with the first collar 10 placed in situ over the second collar 11.

The first collar 10 is shown fixed to the second contact part 9 by being screwed onto it.

The first and second collars 10 and 11 are each formed of a metal, for example stainless steel.

The second contact part 9 comprises a plastics moulded interior, in which a structure is formed which provides contacts.

The contacts are not shown in detail and the manner of their formation will be familiar to the person skilled in the art. Cables 5 and 6 are shown engaging in the interior of the second piece, where they terminate as shown schematically at 20 and are connected to formations for allowing electrical conduction or transmission of optical signals with contacts, of which one, 22, is shown.

The contact 22 extends into a corresponding plug in contact of the first contact part 8. It will not be described in detail and may be substantially according to a design known to the person skilled in the art.

The first contact part 8 further comprises contacts 23 to which wires can be fixed, in a manner known in the art, so that connection may be established by the connector 1 between the cables 5 and 6 and other wires contained within the accessory 2.

The first piece further comprises a mounting bushing 24 which engages in a circular opening in the wall 25 of the accessory 2.

The first piece is clamped into position by a locking member 27 which is screwed onto the exterior of the mounting bushing 24 engaging a screw thread 32. A sealing gasket 26, comprising a circular piece with a hole in the middle, formed of elastomeric material, is clamped between the locking member 27 and the wall 25 of the accessory box 2, to seal the connection. By tightening the locking member 27 with the wall 25 and the seal 26 between it and a flange of the mounting bushing 24, a firm fixing is provided.

In order to maintain the first and second pieces firmly connected, a locking nut 28 is provided. The locking nut 28 is mounted, for free rotation on the second piece. It comprises a radially inwardly directed flange 29 which engages behind a shoulder 30 of the second piece. The locking nut 28 further comprises a screw thread 31 which is engageable with the same screw thread 32 as is engaged by the locking member 27, in accordance with the second aspect of the invention.

In a first manufacturing step, cables 5 and 6 are laid in the interior of the sheath 7.

The cables are engaged with formations 20 in the second contact part 9. The second piece is assembled by mounting the locking nut 28 and the first collar 10 on the contact part 9. The first collar 10 and the second collar 11 are engaged by placing the first collar over the reduced diameter portion of the second collar and forming a crimp 15. The outer sheath 7 is then inserted into the annular bore 16 of the second collar 11 and fixed in place using the screw 18. Separately, the other end of the protective sheath 7 is engaged in the device 4 by any suitable means, for example by a second connector according to the present invention. Separately, the first piece is mounted in an accessory box 2 using the locking member 27.

During assembly of the power, communications or data distribution system in the space beneath the raised floor, devices 2 and 4 are placed at the desired position and finally connected by forming a plug in connection between the first piece and the second piece by inserting contacts 22. The first and second pieces are then securely locked together using the locking nut 28 which is screwed onto the thread 32.

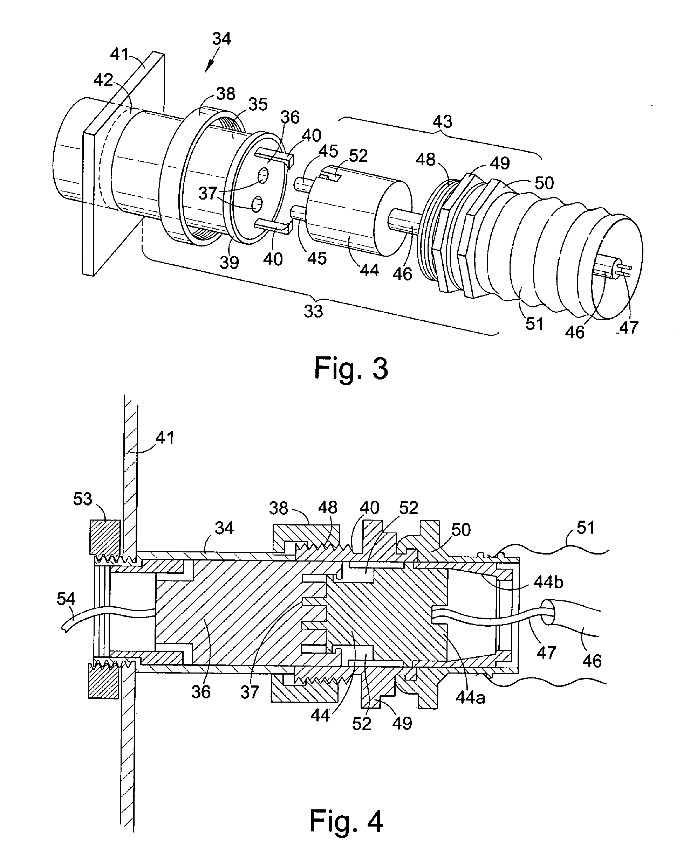

Figure 3 is a sketch isometric view of a connector 33 according to a second embodiment of the invention. It comprises a first piece 34, formed of a first holding part 35 enclosing a first contact part 36, which is fixed to the first holding part. The first holding part 35 is of annular form. The first contact part 36 is shown schematically as comprising a pair of contacts 37, though in use, any configuration of contact could be used. A locking nut 38 is provided, which is internally threaded and which can slide along the holding part 35 up to a shoulder 39.

The first contact part 36 further comprises a pair of locking members 40.

The first piece 34 is shown mounted in a first device which is represented schematically by a wall 41 having a bore 42, in which the first piece 34 is housed. It may be fixed in position by a nut (not shown).

The second piece 43 comprises a second contact part 44 comprising second contacts 45 which are shown schematically as male contacts. In practice, any design of contact engageable with the contacts 37 of the first contact part may be provided. A cable 46 is shown schematically engaging the second contact part 44.

The second contact part 44 is made (as shown in Figure 4) out of two parts comprising a contact carrying part 44a and a contact shielding part 44b, which are screwed together.

It can be seen at the other end of figure 3 that the cable 46 comprises a pair of conductors 47 which form electrical contact with the second contacts 45. The detail is not shown, though any construction familiar to the person skilled in the art may be used.

The second piece further comprises a second holding part 48 of annular form. The second holding part 48 comprises a screw-threaded exterior onto which the screw-threaded interior of the nut 38 may be engaged. It further comprises a set of flats 49 for engagement with a spanner. The second holding part 48 can be divided into a first component or collar, on which the screw threads 48 and flats 49 are formed, and a second component or collar 50 which is rotatably engaged with the first collar. The second collar 50 is also provided with flats. A protective sheath 51 having a convolutions is shown engaged with the end of the second collar 50.

Figure 3 shows a step during the connection of parts of a connector according to the second embodiment of the invention. In previous steps, the first piece 34 has been engaged with the first device 41. Further, the cable 46 has been engaged with the second contact part 44 as described above. The second contact part 44 is shown withdrawn from the second holding part 48. In this configuration, it can be engaged with the first contact part by engaging the respective contacts 37 and 45. The locking members 40 engage in locking slots 52 formed on an outer cylindrical surface of the second contact part 44. As the outer surface of the second contact part 44 is not encumbered in any way, the locking members 40 can moved radially outwards (by engagement of their bevelled ends with respective parts of the formation 52) until they click into place to hold the second contact part. Once contact has been formed, the second holding part 48 can be advanced so that it lies around the second contact part 44, as shown in figure 4. It can then be fixed in position using the locking nut 38. The internal threads of the locking nut 38 engage the screw thread 48. The screw engagement is continued until the second holding part is held tightly against the first holding part, with the locking nut abutting the shoulder 39 of the second holding part.

Figure 4 shows the connector of figure 3, in schematic cross section, when engaged. Also visible in figure 4 are a locking nut 53 whereby the first annular part 34 is fixed to the first device 41, and electrical cables 54 extending the from the first contact part 36 to apparatus incorporated in the device 41. Details of the connection with the first contacts 37 are not shown, for clarity, but may be formed in a manner known to the person skilled in the art.

It can be seen in figure 4 that the locking members 40 engage in the recesses 52 of the second contact part 44. In order to disengage, it is clear that they would have to move radially outwards. However, such movement is prevented by the internal annular surface of the second holding part 48. Disconnection can only occur by first of all loosening the nut 38 and then moving the second holding part 48 away from the second contact part. 36

In this way, a great degree of safety is provided against accidental disconnection of the first and second contact parts 36, 44.

It should be noted that the second contact part 44 is only axially fixed with respect to the first holding part through its engagement with the first contact part 36. It is not substantially rotationally fixed with respect to the protective sheath 51 or the cable 46.

The present invention has been described by way of example only and modifications can be made within the invention. The present invention extends to equivalents of the features described. The invention also consists in any individual features described or implicit herein or shown or implicit in the drawings or any combination of any such features or any generalisation of any such features or combination.

## Claims

1. A connector for connecting a device and a cable structure of the type comprising at least one cable and an outer protective sheath which is not rotationally fixed to the cable, the connector comprising a first piece having a first contact and the second piece having a second contact, the first piece and second piece being removably attached to one another so that, in the engaged position the first and second electrical contacts contact one another to allow transmission of power, communications or data, the second piece having a formation for connecting to the cable, a first component for engaging the first piece and a second component which is rotatable in use with respect to the first component and the cable, the second component having means for fixing to the sheath of the cable structure, the first component and second component being rotatable with respect to one another but axially substantially fixed with respect to one another.

2. A connector according to claim 1, wherein the second component comprises at least one projecting fixing part, the fixing part being engageable in a part of the structure of the protective sheath.

3. A component according to claim 2, wherein the second component comprises an annular opening into which the sheath is insertable, being engageable when in the annular opening by the fixing means projecting radially inwardly.

4. A connector according to claims 2 or 3, wherein the fixing means comprises a screw extending through a threaded hole formed in the second component.

5. A connector according to any preceding claim, wherein at least one of the first and second components comprises a body having a circular shape, an annular formation being provided defining a shoulder extending around at least part of the circular body, the other of the first and second component comprising a formation which is engageable with the shoulder.

6. A connector according to claim 5, wherein there are at least two shoulders so that a formation of the other component can be trapped between the two shoulders or the two shoulders can be trapped between formations of the other component.

7. A connector according to claim 6, wherein one of the first and second components comprises two shoulders axially spaced apart from one another and the other component comprises an annually extending crimp which has been formed in a metal body to have a dimension which corresponds to the axial spacing between the shoulders.

8. A connector according to any preceding claim, comprising means for preventing axial separation of the first piece and second piece.

9. A connector according to claim 8, wherein the means for preventing axial separation for the first the second and piece comprises a locking collar having a screw thread for interaction with a corresponding screw thread of one of the first and second pieces and a rotatable connection to allow the locking collar to rotate with respect to the other piece.

10. A connector according to any preceding claim, comprising a mounting bush comprising a bore in which the first piece is mounted, and a locking nut engageable with an external thread formed on the mounting bush.

11. A connector according to any preceding claim, wherein the first piece comprises a first contact part comprising the first contacts and the second piece comprises a second contact part comprising the second contacts, the second contact part comprising the formation for connecting to the cable, means being provided for fixing the first and second contact parts, when the respective contacts are engaged, with respect to the first and second pieces.

12. A connector according to any preceding claim, wherein the first component is fixed with respect to the formation of the first piece.

13. A connector according to claim 11 or 12, wherein the first piece comprises a first holding part and a first contact part and the second piece comprises a second holding part and a second contact part, the second contact part being substantially not fixed with the respect to the second holding part when the first and second contacts are not engaged.

14. A connector according to claim 13, wherein the first or second contact part has a generally cylindrical outline having a first radius and the respective first or second holding part has a second internal radius, the first radius being equal to or smaller than the second radius, so that the first or second contact part is mountable in the first or second holding part respectively.

15. A connector according to any of claims 11 to 13, comprising a locking part for holding the first and second contact parts in the engaged position.

16. A connector according to claim 15, wherein the locking part comprises a part which is movable into or out of engagement with a face of at least one of the first and second contact parts, movement of the locking part being prevented when the respective contact part is held in the respective holding part, by the walls of the holding part.

17. A connector for an accessory box may have a first plug-in piece fixable in an accessory box by a structure which comprises a bushing having a screw threaded exterior for projecting out of an opening of the accessory box and a flange for engaging inside the accessory box, a fixing nut being provided for clamping the wall of the accessory box between the flange and the nut engaged with the screw thread, a second plug-in piece being connectable to the first piece and being further fixed thereto by a screw threaded nut engaging the same screw thread.

18. A method of forming a connection in the system for distributing power, communications or data, comprising providing a connector according to any preceding claim and connecting the first and second pieces.

19. A system for distributing power, communications or data, comprising devices connected by a connector according to the present invention.

20. A system according to claim 19, being mounted in the space beneath a raised floor structure, the first piece being connected to an accessory box mounted at floor level.
